(19) Europäisches Patentamt
European Patent Office
Office européen des brevets

(11) **EP 2 278 360 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
*G01V 8/12* *(2006.01)*

(21) Anmeldenummer: **10007001.0**

(22) Anmeldetag: **07.07.2010**

(54) **Verfahren zum Betrieb eines optischen Sensors**

Method for operating an optical sensor

Procédé de fonctionnement d'un capteur optique

(84) Benannte Vertragsstaaten:
**AT CH DE ES FR GB IT LI**

(30) Priorität: **16.07.2009 DE 102009033438**

(43) Veröffentlichungstag der Anmeldung:
**26.01.2011 Patentblatt 2011/04**

(73) Patentinhaber: **Leuze electronic GmbH + Co. KG**
**73277 Owen/Teck (DE)**

(72) Erfinder:
• **Argast, Martin**
**72584 Hülben (DE)**
• **Fauth, Siegfried**
**73230 Kirchheim/Teck (DE)**

(74) Vertreter: **Ruckh, Rainer Gerhard**
**Fabrikstrasse 18**
**73277 Owen/Teck (DE)**

(56) Entgegenhaltungen:
DE-A1- 10 355 008    DE-A1- 19 833 353
DE-C1- 4 237 311     DE-C1- 4 319 451
US-A1- 2009 016 735

**Beschreibung**

Derartige optische Sensoren weisen generell einen Sendelichtstrahlen emittierenden Sender, einen Empfangslichtstrahlen empfangenden Sender und eine Auswerteeinheit zur Generierung eines Objektfeststellungssignals in Abhängigkeit der Empfangssignale des Empfängers auf. Der Sender emittiert dabei Sendelichtstrahlen in Form von Sendepulsen, wobei auf jeweils einen Sendepuls eine Pause folgt.

Ein derartiger optischer Sensor ist beispielsweise aus der DE 42 37 311 C1 bekannt. Zur Vermeidung von Störungen in Folge von Fremdlichteinstrahlungen wird in den jeweiligen Sendepausen eine Abfrage auf Anliegen eines Störungssignals durchgeführt. Wird keine Störung erkannt, wird der nächste Sendepuls zu seinem Sollzeitpunkt emittiert. Liegt dagegen eine Störung vor, wird das Aussenden des Sendepulses hinausgezögert..

Nachteilig hierbei ist, dass durch das Hinauszögern der Emission von Sendepulsen die Schaltfrequenz, das heißt die Wiederholfrequenz mit der das Objektfeststellungssignal generiert wird, unkontrolliert reduziert werden kann. Weiterhin ist nachteilig, dass Störeinstrahlungen, die zeitlich mit der Aussendung eines Sendepulses zusammenfallen, prinzipiell nicht erkannt werden können. Schließlich ist dieses Verfahren auf optische Sensoren begrenzt, die mit Sendepuls-Folgen arbeiten, bei welchen die Pausen zwischen den Sendepulsen erheblich größer sind als die Pulslänge, das heißt Zeitdauer eines Sendepulses.

Die DE 103 55 008 A1 betrifft ein Verfahren zur Verarbeitung eines Empfangssignals und einen optischen Sensor. Der erste Verfahrensschritt des Verfahrens betrifft das Speichern des Verlaufs eines Empfangssignals. In einem zweiten Verfahrensschritt erfolgt das Abtasten des Empfangssignals in einem vorgegebenen Zeitraster $\Delta t$. Die Abtastung erfolgt taktsynchron zum Sendetakt der von Sender des optischen Sensors emittierten Sendepulsen. Der folgende Verfahrensschritt betrifft die Korrelation der bei der Abtastung erhaltenen Abtastwerte mit einer aus einer Folge von Matrixwerten bestehenden Filtermatrix zur Generierung eines aus einer diskreten Folge von Empfangssignalwerten bestehenden gefilterten Empfangssignals. In einem abschließenden Verfahrensschritt findet eine Bewertung des gefilterten Empfangssignals mit wenigstens einem Schwellwert zur Generierung eines Objektfeststellungssignals statt.

Die DE 198 33 351 A1 betrifft ein Verfahren zum Betrieb eines Lichttasters zur Erfassung von Objekten in einem Überwachungsbereich mit einem eine Folge von Sendelichtimpulsen emittierenden Sender, einem Empfänger, dessen Empfangssignale zur Erfassung von auf den Empfänger auftreffenden Sendelichtimpulsen und Störlichtimpulsen mit einem Schwellwert S1 bewertet werden. Unmittelbar vor Aussenden eines Sendelichtimpulses wird abgefragt, ob das Empfangssignal oberhalb des Schwellwerts S1 liegt. Falls dies der Fall ist, wird diese Abfrage solange wiederholt, bis das Empfangssignal unterhalb des Schwellwerts liegt. Erst dann erfolgt eine Aussendung des Sendelichtimpulses. Während des Aussendens eines Sendelichtimpulses erfolgt ein zweiter Vergleich des Empfangssignals mit dem Schwellwert S1. Bei Registrieren eines Sendelichtimpulses oder eines Störlichtimpulses wird die Sendepause zwischen zwei aufeinanderfolgenden Sendelichtimpulsen in vorgegebener Weise geändert.

Die DE 43 19 451 C2 betrifft eine aus einem Sender und einem Empfänger bestehende Einrichtung zum Erfassen von Gegenständen, bei der das Empfangssignal wenigstens einem Komparator zugeführt wird, der das Empfangssignal an seinem ersten Eingang jeweils hinsichtlich seiner durch Vergleichsspannungen an einem zweiten Eingang bestimmen Ein- und Ausschaltbedingung sowie bezüglich der Signalreserve überprüft. Der Ausgang des Komparators ist an einen Signaleingang eines nach seiner Aktivierung Sendeimpulse erzeugenden Microcontrollers angeschlossen. Die Vergleichsspannungen werden über mit einem Eingang des Komparators verbundene und von korrespondierenden Schaltausgängen des Microcontrollers aktivierte Widerstände erzeugt. Ein Sendeimpuls wird jeweils erst nach einer Abfrage des Komparators auf Anliegen eines Störsignals und bei Nichterkennung eines solchen Signals ausgegeben. Nach Aussenden des Sendeimpulses erfolgt eine zweite Abfrage des Komparators, wobei das Zeitintervall bis zum Aussenden des nächsten Sendeimpulses in Abhängigkeit von Störsignalen während der Abfragen im Mikrocontroller einstellbar ist.

Der Erfindung liegt die Aufgabe zugrunde, ein Verfahren bereitzustellen, mittels dessen eine verbesserte Störungserkennung bei optischen Sensoren ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren zum Betrieb eines optischen Sensors umfasst einen Sendelichtstrahlen emittierenden Sender, einen Empfangslichtstrahlen empfangenden Empfänger und eine Auswerteeinheit, in welcher in Abhängigkeit der Empfangssignale des Empfängers ein Objektfeststellungssignal generiert wird. Der Sender emittiert als Sendelichtstrahlen Sendepulse mit einer vorgegebenen Taktfrequenz. Die Empfangssignale werden am Ausgang des Empfängers taktsynchron zur Taktfrequenz der Sendepuls abgetastet. Aus den durch die Abtastung erhaltenen Abtastwerten wird das Objektfeststellungssignal generiert wird. Durch eine Summenbildung von Abtastwerten werden Störungen erfasst und ein Störfeststellungssignal generiert.

Ein wesentlicher Vorteil des erfindungsgemäßen Verfahrens besteht darin, dass nicht nur unterschiedliche Störungen erfasst, sondern auch voneinander unterschieden werden können. Hierzu gehören insbesondere eine Erhöhung des Verstärkereingangsrauschens durch Gleichlichtbeeinflussung, Einzelstörpulse, wie z.B. durch eine Stroboskop- oder Blitzlampe, Störeinstrahlungen mit diskreter Frequenz in der Nähe der Sendetaktfrequenz, Störeinstrahlungen deutlich unterhalb der Sendetaktfrequenz und Störeinstrahlungen deutlich oberhalb der Sendetaktfrequenz.

Ein besonderer Vorteil des erfindungsgemäßen Verfahrens besteht darin, dass auftretende Störeinstrahlungen während der Aussendung von Sendepulsen erfasst und von diesen unterschieden werden können.

Schließlich ist vorteilhaft, dass das erfindungsgemäße Verfahren für beliebige Puls- /Pausenverhältnisse der Sendepulse des optischen Sensors einsetzbar ist. Besonders vorteilhaft ist das erfindungsgemäße Verfahren einsetzbar, wenn der Sender Sendepulse mit einem Puls-Pausenverhältnis emittiert, bei welchem die Längen der Pausen in derselben Größenordnung wie die Längen der Sendepulse sind.

Dabei ist es insbesondere vorteilhaft, wenn der Sender Sendepulse mit einem Puls-Pausenverhältnis von 1:1 emittiert.

Ein weiterer wesentlicher Vorteil des erfindungsgemäßen Verfahrens besteht darin, dass mit denselben Abtastwerten, aus welchen das Objektfeststellungssignal generiert wird, auch die Erfassung von Störungen, das heißt insbesondere Störlichteinstrahlungen, erfolgen kann. Die Erfassung der Störungen sowie die Generierung eines Störfeststellungssignals kann damit mit geringem konstruktivem Aufwand durchgeführt werden.

Gemäß einer vorteilhaften Ausführungsform wird pro Sendeperiode das Empfangssignal jeweils am Ende eines Sendepulses und am Ende einer Sendepause abgetastet.

Dabei wird die Differenz der bei den beiden Abtastpunkten pro Sendeperiode ermittelten Abtastwerte des Empfangssignals zur Generierung des Objektfeststellungssignals genutzt.

Für den Fall, dass der optische Sensor als Lichttaster ausgebildet ist, bei welchem als Objektfeststellungssignal ein binäres Schaltsignal zur Anwesenheitskontrolle von Objekten in einem Überwachungsbereich generiert wird, wird vorteilhaft eine Schwellwertbewertung der Differenzen zur Generierung des Objektfeststellungssignals durchgeführt.

Vorteilhaft erfolgt zur Erfassung von Störungen eine Mittelwertbildung der bei der Abtastung erhaltenen Abtastwerte.

Dabei wird der Mittelwert auf einen dem störungsfreien Betrieb entsprechenden Referenzwert bezogen.

Durch eine zeitaufgelöste Analyse der Mittelwerte können Störungen unterschiedlicher Art erfasst werden.

Besonders vorteilhaft werden die erfassten Störungen dazu verwendet, den Betrieb des optischen Sensors in geeigneter Weise an die Störungen so anzupassen, damit Fehlfunktionen der optischen Sensoren vermieden werden.

Beispielsweise wird zur Vermeidung von Störungen die Taktfrequenz des Senders geändert.

Bei einer Änderung der Taktfrequenz nach einer Zufallsfolge erfolgt ein Ausweichen auf vorhandene Störungen, wodurch die Wahrscheinlichkeit einer Fehlfunktion des optischen Sensors erheblich reduziert wird. Ebenso kann die Taktfrequenz gezielt kurzfristig geändert werden um so zu gewährleisten, dass auch während des Sendebetriebs des Senders auftretende Störungen erfasst werden können.

Weiterhin kann die Schaltfrequenz, mit der das Objektfeststellungssignal generiert wird bei vorhandenen Störungen reduziert werden. Dadurch wird die Wahrscheinlichkeit von Fehldetektionen mit dem optischen Sensor reduziert.

Schließlich kann der Zustand des ausgegebenen Objektfeststellungssignals bei vorhandener Störung entweder eingefroren oder auf einen Zustand "AUS" (Objekt nicht erkannt) gesetzt werden.

Mit dieser Maßnahme wird gewährleistet, dass der optische Sensor bei Auftreten von Störungen in einen sicheren Zustand übergeht.

Das erfindungsgemäße Verfahren kann für optische Sensoren unterschiedlicher Art eingesetzt werden. Dabei wird das Verfahren besonders vorteilhaft für optische Sensoren eingesetzt, bei welchen der Sender und der Empfänger in einem gemeinsamen Gehäuse untergebracht sind, so dass diese von einer zentralen Einheit, vorzugsweise der Auswerteeinheit, so angesteuert werden, dass eine zur Taktfrequenz des Senders taktsynchrone Abtastung der Empfangssignale des Empfängers durchgeführt werden kann.

Insbesondere wird dieses Verfahren für Reflexionslichtschranken oder energetisch arbeitende Lichttaster oder nach dem Triangulationsprinzip arbeitende Lichttaster eingesetzt.

Die Erfindung wird im Folgenden anhand der Zeichnungen erläutert. Es zeigen:

Figur 1:  Blockschaltbild eines als Lichttaster ausgebildeten optischen Sensors.

Figur 2:  Empfangsseitige Schaltungskomponenten des optischen Sensors gemäß Figur 1.

Figur 3:  Zeitdiagramm der vom Sender des optischen Sensors gemäß Figur 1 emittierten Sendepulse und der hierzu entsprechenden Empfangssignale.

Figur 4:  Zeitlicher Verlauf der Empfangssignale des optischen Sensors gemäß Figur 1 bei vorhandenem Fremdlichteinfluss.

Figur 5a, b:  Zeitdiagramm für das zeitliche Eintauchen eines Objekts in den vom optischen Sensor überwachten Überwachungsbereich.

Figur 6a:     Zeitlicher Verlauf der Empfangssignale des optischen Sensors gemäß Figur 1 bei einem Fremdlichtblitz.

Figur 6b:     Zeitliche Verläufe von Signalen zur Erfassung des Fremdlicht- blitzes.

Figur 7:      Zeitdiagram für eine zeitaufgelöste Erfassung von Störungen bei dem optischen Sensor gemäß Figur 1.

Figur 8:      Einschwingverhalten der Signale der Signalaufbereitungseinheit des optischen Sensors gemäß Figur 1.

Figur 9a:     Zeitdiagramme von Bandpässen zur Störsignalerfassung bei fester Taktfrequenz des Senders des optischen Sensors gemäß Figur 1.

Figur 9b:     Zeitdiagramme von Bandpässen zur Störsignalerfassung bei verschiedenen Taktfrequenzen des Senders des optischen Sen- sors gemäß Figur 1.

Figur 10a:    Zeitliche Unterteilung von Störwerten im Zeitraster für den opti- schen Sensor gemäß Figur 1.

Figur 10b:    Zählung von Störwerten gemäß Figur 10a.

Figur 10c:    Generierung eines Störfeststellungssignals in Abhängigkeit der Zählung gemäß Figur 10b.

Figur 11:     Elimination von Störwerten im Zeitraster gemäß Figur 10a.

Figur 12:     Distanzabhängigkeit von Signalen des optischen Sensors gemäß Figur 1.

Figur 13:     Zustandsübergangsdiagramm für den optischen Sensor gemäß Figur 1.

Figur 14:     Störungsabhängige Variation der Schaltfrequenz für den opti- schen Sensor gemäß Figur 1.

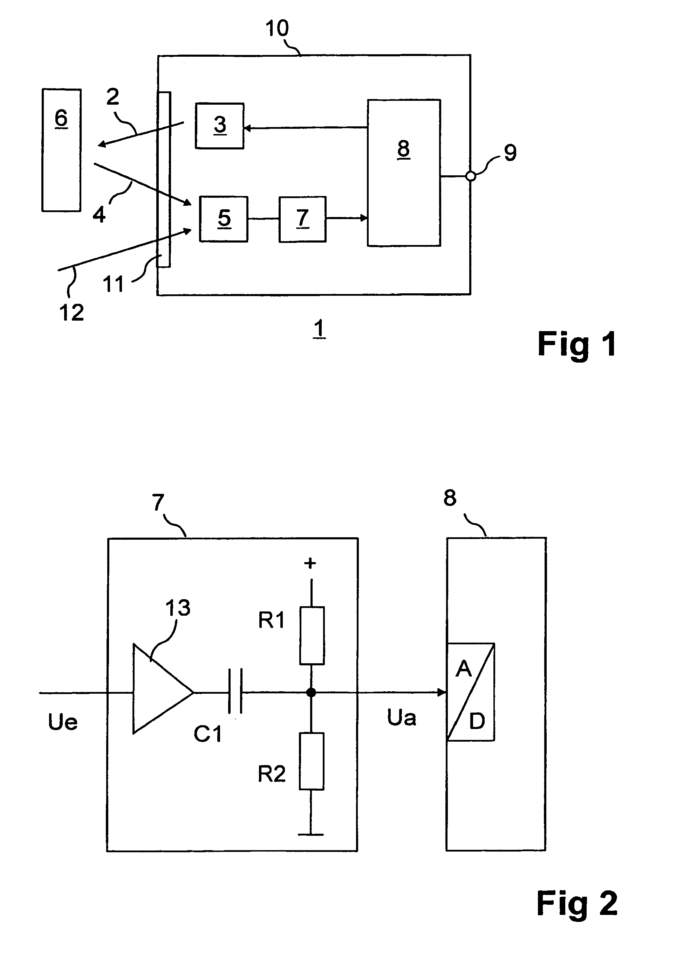

Figur 1 zeigt schematisch den Aufbau eines als Lichttaster ausgebildeten optischen Sensors. Der optische Sensor weist einen Sendelichtstrahlen 2 emittierenden Sender 3 und einen Empfangslichtstrahlen 4 empfangenden Empfänger 5 auf. Der Sender 3 kann von einer Leuchtdiode gebildet sein, der Empfänger 5 besteht im einfachsten Fall aus einer einzelnen Photodiode. Mit dem optischen Sensor 1 erfolgt eine Detektion von Objekten 6 in einem Überwachungsbereich. Hierbei werden vom Sender 3 emittierte Sendelichtstrahlen 2 am Objekt 6 reflektiert und von dort als Empfangslichtstrahlen auf den Empfänger 5 geführt. Die dadurch am Ausgang des Empfängers generierten Empfangssignale $U_e$ werden einer Signalaufbereitungseinheit 7 zugeführt. Die Ausgangssignale $U_a$ der Signalaufbereitungseinheit 7 werden in eine Auswerteeinheit 8 eingegeben, die von einem Microcontroller oder dergleichen gebildet ist. Dort wird in Abhängigkeit der Empfangssignale als Objektfeststellungssignal ein binäres Schaltsignal generiert, dessen Schaltzustände angeben, ob sich ein Objekt 6 im Überwachungsbereich befindet oder nicht. Das Schaltsignal wird über einen Schaltausgang 9, der an die Auswerteeinheit angeschlossen ist, ausgegeben. Die Komponenten des optischen Sensors 1 sind in einem Gehäuse 10 untergebracht. In der dem Überwachungsbereich zugewandten Frontwand des Gehäuses befindet sich ein Fenster 11, durch welches die Sendelichtstrahlen 2 und Empfangslichtstrahlen 4 geführt sind. Neben den Empfangslichtstrahlen 4 können, wie in Figur 1 gezeigt, auch Störlichtstrahlen 12, die allgemein von Fremdlicht unterschiedlicher Art gebildet sein können, auf den Empfänger 5 gelangen und zu Fehlschaltungen des optischen Sensors 1 führen.

Figur 2 zeigt die Schaltungskomponenten der Signalaufbereitungseinheit 7. Das Empfangssignal $U_e$ wird durch einen Verstärker 13 verstärkt und über einen Koppelkondensator C1 zu einem Spannungsteiler R1/R2 geführt, der den Arbeitspunkt für den nachfolgenden AD-Wandler, der in der Auswerteeinheit 8 integriert ist, vorgibt. Der Koppelkondensator C1 bildet einen Hochpass und ergibt zusammen mit dem Verstärker 13 mit Tiefpassverhalten einen Bandpass.

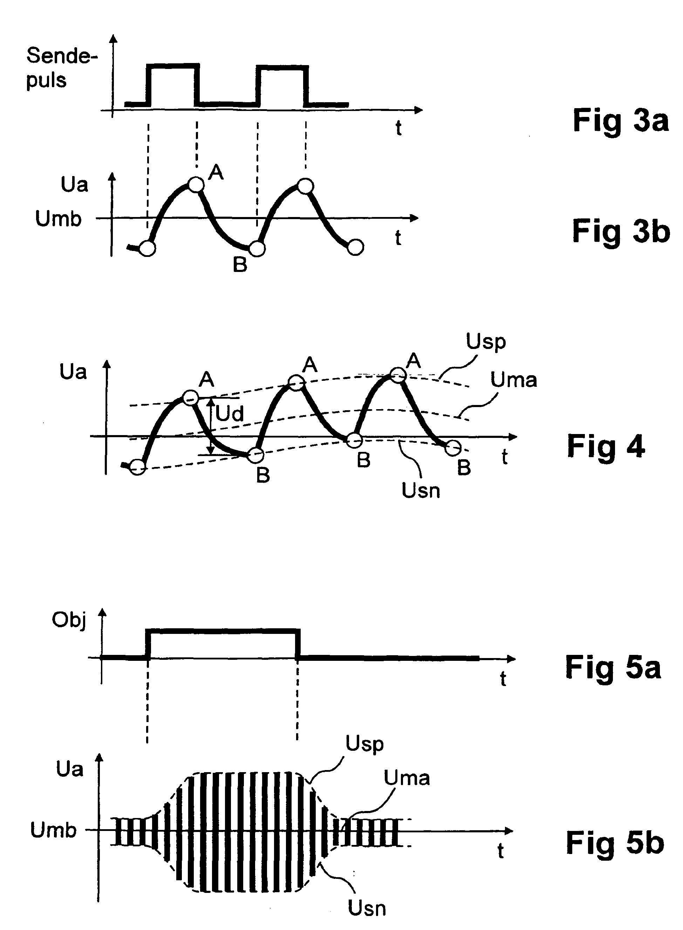

Der Sender 3 des optischen Sensors 1 emittiert Sendelichtstrahlen 2 in Form von Sendepulsen. Wie aus dem oberen Diagramm von Figur 3 ersichtlich, emittiert der Sender 3 Sendepulse mit einer Taktfrequenz und einem Pulspausenverhältnis von 1:1, das heißt die Länge (Pulsdauer) eines Sendepulses ist gleich der Dauer einer Pause. Der Sender 3 emittiert dabei rechteckige Pulsfolgen.

Das untere Diagramm zeigt das am Ausgang der Signalaufbereitungseinheit erhaltene Ausgangssignal, das heißt das verstärkte Empfangssignal $U_a$, das bei einer Objektdetektion erhalten wird. Das verstärkte Empfangssignal weist dieselbe Frequenz wie die Taktfrequenz der Sendepulse auf. Durch die Bandpasswirkung der Verstärkung in der Signalaufbereitungseinheit 7 ist das verstärkte Empfangssignal $U_a$ nicht mehr rechteckförmig.

Das verstärkte Empfangssignal $U_a$ wird taktsynchron zur Taktfrequenz des Senders abgetastet. Die taktsynchrone Abtastung ist deshalb möglich, weil der Sender 3 und der Empfänger 5 an die Auswerteeinheit 8 angeschlossen sind, die die taktsynchrone Abtastung steuert.

Wie aus Figur 3 ersichtlich wird das verstärkte Empfangssignal $U_a$ pro Sendeperiode der Sendepulse zweimal abgetastet, und zwar am Ende eines Sendepulses (in Figur 3 mit A bezeichnet) und am Ende einer Pause (in Figur 3 mit B bezeichnet).

Aus der Differenz der beiden bei den Abtastungen erhaltenen Spannungen, das heißt Abtastwerten $U_A$, $U_B$, wird die Differenz $U_d$ gemäß

$$U_d = U_A - U_B$$

gebildet. Aus dieser Differenz wird als Objektfeststellungssignal ein binäres Schaltsignal generiert. Hierzu wird die Differenz $U_d$ mit einem Schwellwert bewertet. Liegt $U_d$ oberhalb des Schwellwerts nimmt das Schaltsignal den Schaltzustand EIN (Objekt erkannt) ein. Liegt die Differenz unterhalb des Schwellwerts, nimmt das Schaltsignal den Schaltzustand AUS (kein Objekt) ein.

Das Schaltsignal wird mit einer bestimmten Schaltfrequenz, das heißt Wiederholrate gebildet, deren Maximalwert durch die Taktfrequenz der Sendepulse bestimmt ist.

Figur 3 zeigt den Fall eines verstärkten Empfangssignals $U_a$, wenn keine Störung, das heißt keine Fremdlichteinstrahlung vorhanden ist. In diesem ist der Mittelwert des verstärkten Empfangssignals $U_a$ zeitlich konstant und identisch mit einem Bezugswert $U_{mb}$, der durch den Spannungsteiler R1/R2 vorgegeben ist.

Figur 4 zeigt den Fall des verstärkten Empfangssignals $U_a$ bei vorhandenem Fremdlichteinfluss, das heißt für den Fall, dass zusätzlich zu den Empfangslichtstrahlen auch Störlichtstrahlen 12 auf den Empfänger treffen. Durch die Fremdlichteinstrahlung ist dem verstärkten Empfangssignal $U_a$ ein Spannungsanteil überlagert, so dass der Mittelwert des verstärkten Empfangssignals $U_a$ nicht mehr konstant ist.

Zur Erfassung der Störanteile im verstärkten Empfangssignal $U_a$ wird aus dem Abtastwert $U_A$, $U_B$ der Mittelwert gemäß der Beziehung

$$U_{ma} = (U_A + U_B)/2$$

gebildet.

Wird der aktuelle Mittelwert $U_{ma}$ über einen genügend großen Zeitraum gemittelt, stellt sich der durch den Spannungsteiler R1/R2 vorgegebene Bezugswert $U_{mb}$ ein.

$$U_{mb} = 1/m * \sum U_{ma} \text{ (Summe von 1 bis m)}$$

Dabei ist m die Anzahl der gemittelten Werte $U_{ma}$. Der Wert für m liegt zwischen 2 und 100, vorzugsweise bei 4.

Die Abweichung des aktuellen Mittelwertes $U_{ma}$ vom Bezugswert $U_{mb}$ ist ein Maß für das Vorhandensein von Fremdlicht.

Figur 5 zeigt das Verhalten bei einem seitlich eintauchenden Objekt. Dabei erhöht sich der Empfangspegel, wenn das Objekt 6 von den Sendelichtstrahlen 2 getroffen wird, bis die Sendelichtstrahlen 2 vollständig auf dem Objekt 6 auftreffen. Ist kein messbares Fremdlicht vorhanden, ist die durch die Spitzenwerte $U_{sp}$ und $U_{sn}$ gebildete Hüllkurve symmetrisch zum Bezugswert $U_{mb}$. Damit fällt auch $U_{ma}$ mit $U_{mb}$ zusammen, woraus geschlossen werden kann, dass kein Fremdlicht vorhanden ist.

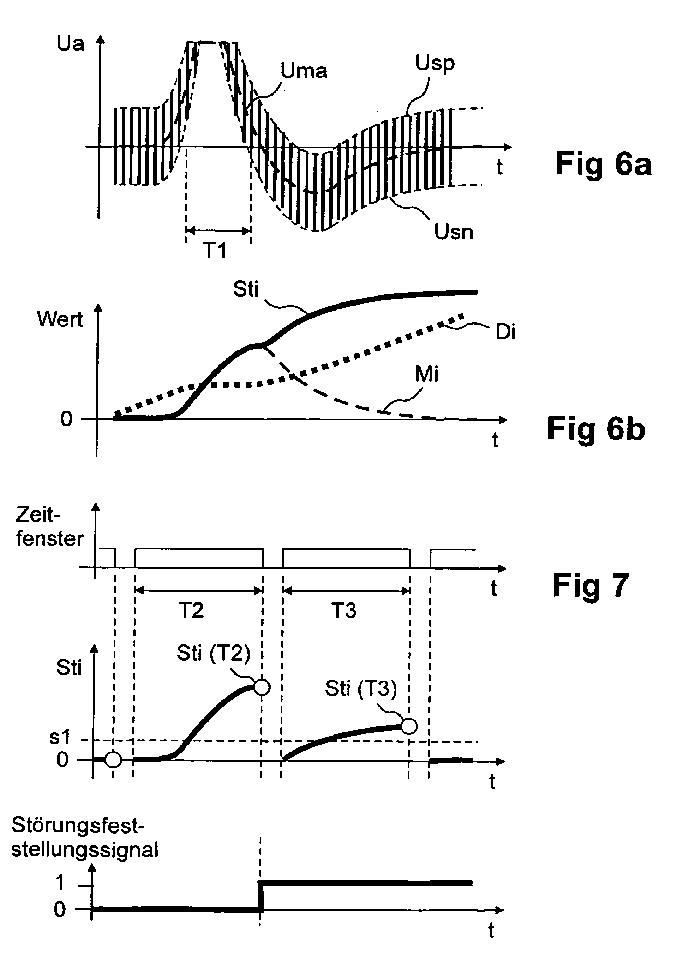

Figur 6a zeigt die Situation bei einem Fremdlichtblitz, der das Ausgangssignal $U_a$ in die Begrenzung treibt, so dass während des Zeitraums T1 eine starke Signalverfälschung vorliegt, was zu Fehlschaltungen führen würde. Um rechtzeitig eine solche Störung zu erkennen, wird die Abweichung des aktuellen Mittelwertes $U_{ma}$ vom Bezugswert $U_{mb}$ aufsummiert wird. Das vorzeichenbehaftete Aufsummieren ergibt die in Figur 6b dargestellte Kurve Mi, die nach dem Abklingen der Störung durch das Fremdlicht ebenfalls auf Null abklingt. Bei Störung durch rauschähnliches Fremdlicht oder Erhöhung des Rauschens durch Gleichlicht würden die Werte der Kurve Mi sich kaum von Null unterscheiden. Deshalb wird der Betrag der Abweichung dUm zum Integral Sti aufsummiert. Weiterhin werden Differenzintergrale Di gebildet. Bei den Differenzintegralen handelt es sich um die Differenzen $U_d = U_A - U_B$, die über eine vorgegebene Zeit zum Difierenzintegral Di aufsummiert werden. Damit bilden die Differenzintegrale Di Größen aus welchen das Objekt-feststellungssignal ableitbar ist.

$$dUm = I\ Uma - Umb\ I$$

$$Sti\ =\ \sum\ dUm.$$

Dabei wird die Summe von 1 bis k gebildet, wobei k möglichst groß gewählt wird, um eine zuverlässige Datenbasis zu erhalten. Die Werte für k liegen zwischen 5 und 1000, vorzugsweise bei 40.

Figur 7 zeigt die praxisgerechte Art der Auswertung. Dabei werden Zeitfenster definiert, in denen eine vorgegebene Anzahl von Sendepulsen gesendet (Burstpakete) und die Betragsabweichung dUm aufsummiert wird.

Die Zeitfenster werden so gewählt, dass die gewünschte Schaltfrequenz der Vorrichtung erreicht wird, aber kurze Störungen unterdrückt werden.

Vorzugsweise ist    $5 < k < 1000$ (z.B. $k = 40$) und
$2 < m < 100$ (abhängig von der Zeitkonstante
des Hochpasses C1, R1 II R2, z.B. $m = 4$).

Wie in Figur 7 gezeigt, wird nach jedem Zeitfenster T2, T3 der Wert von Sti auf Null gesetzt. Der Störwert Sti, jeweils am Ende eines Zeitfensters, wird mit Hilfe des Schwellwertes s1 bewertet. Wird der Schwellwert s1 überschritten, liegt Fremdlicht vor, das zur Verfälschung des Differenzintegrales Di und damit des Schaltsignals führen kann. Der Schwellwert s1 kann an das Differenzintegral Di angepasst werden. Bei großem Abstand des Differenzintegrales Di vom Schwellwert s2 kann eine größere Störbeeinflussung zugelassen werden, d.h. der Schwellwert s1 kann höher gewählt werden.

Als Ergebnis der Auswertung in den einzelnen Zeitfenstern wird ein Störfeststellungssignal erhalten, das als binäres Signal angibt, ob eine Störung vorhanden ist (Zustand 1, das heißt Störfeststellungssignal ist gesetzt) oder ob keine Störung vorhanden ist (Zustand 0, das heißt Störfeststellungssignal ist nicht gesetzt). Bei dem Beispiel von Figur 7 wird im Zeitfenster F2 erstmalig eine Störung erkannt, so dass am Ende des Zeitfensters das Störfeststellungssignal gesetzt wird. Das Störfeststellungssignal bleibt solange gesetzt, bis in einem folgenden Zeitfenster keine Störung mehr erkannt wird.

Das Störfeststellungssignal kann im einfachsten Fall direkt am optischen Sensor als Warnmeldung ausgegeben werden. Bevorzugt wird das Störfeststellungssignal ausgewertet, um bei vorhandener Störung geeignete Gegenmaßnahmen einzuleiten, das heißt insbesondere den optischen Sensor in einen sicheren Zustand zu überfuhren. Zu diesen Maßnahmen gehören insbesondere:

a) Die Daten aus einem Zeitfenster, in welchem eine Störung erkannt wurde, werden als ungültig verworfen und von der Auswertung hinsichtlich des Schaltausganges ausgeschlossen. Der Schaltausgang bleibt damit so lange in seinem aktuellen Zustand eingefroren, bis das Störfeststellungssignal wieder zurückgesetzt wird. Das erfolgt, sobald der Wert von Sti am Ende eines Zeitfensters den Schwellwert s1 unterschreitet.
b) Der Schaltausgang wird bei "Störung erkannt", das heißt bei gesetztem Störfeststellungssignal, in einen definierten Zustand, z.B. Zustand "Aus" gesetzt, wenn der Status "Störung erkannt" über eine vorgegebene Anzahl von Zeitfenster ansteht.
c) Durch Messung mit verschiedenen Taktfrequenzen des Senders, z.B. f1, f2 und f3, wird diejenige Frequenz ermittelt, bei der der Messwert mit hoher Wahrscheinlichkeit von der Störung beeinflusst wird. Nur dieser Messwert wird von der weiteren Auswertung ausgeschlossen.

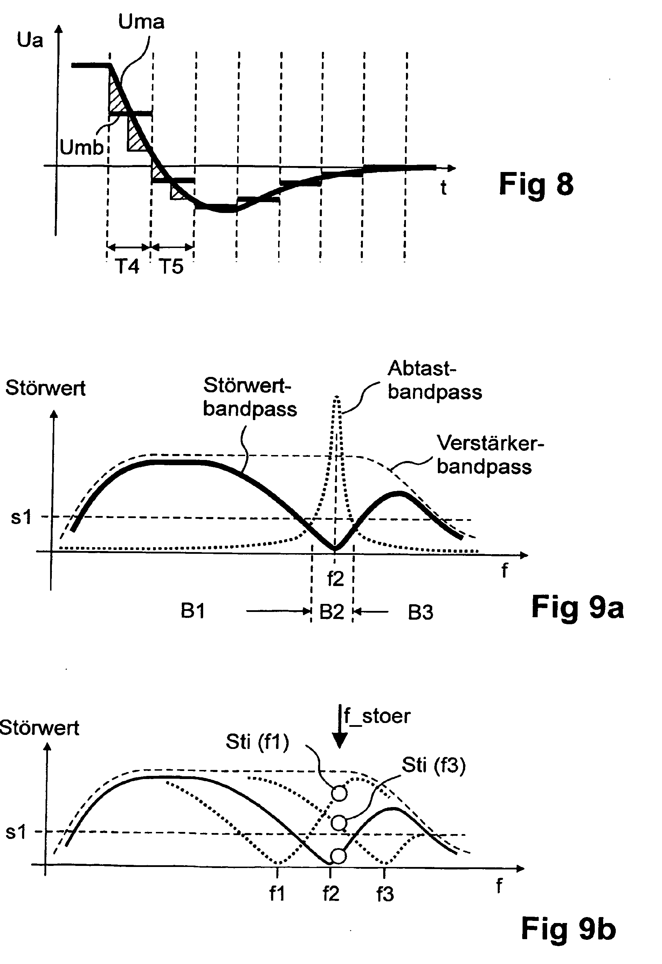

Figur 8 zeigt das typische Einschwingverhalten des Ausgangssignals $U_a$ der Signalaufbereitungseinheit. Damit der aktuelle Bezugswert $U_{mb}$ nicht durch den Einschwingvorgang verfälscht wird, ist die Zeit T4 sehr kurz gewählt (z.B. $m=4$). Die schraffierte Fläche entspricht dem Beitrag zur aufsummierten Betragsabweichung Sti. Um den Einfluss des Einschwingens weiter zu reduzieren, kann die Einschwingphase T4 und evtl. T5 von der weiteren Auswertung ausgeschlossen werden.

Figur 9a zeigt den durch die taktsynchrone Abtastung erhaltenen Abtastbandpass bei der Frequenz f2. Die Resonanzfrequenz f2 ist identisch mit der Sendetaktfrequenz. Störungen im Bereich B2 führen zu Schwebungen des Differenzintegrales Di und damit zu möglichen Fehlschaltungen. Fremdlicht mit Frequenzanteilen, die vorwiegend in den Bereich B2 fallen, können nicht durch die Auswerteverfahren nach Figur 7 erkannt werden, da sie den Mittelwert $U_{ma}$ nicht oder wenig verfälschen. Fremdlicht mit Frequenzanteilen in den Bereichen B1 oder B3 wird weitgehend durch den Abtastbandpass unterdrückt. Störpegel in den Bereichen B 1 oder B3 werden als solche erkannt. Durch die Bildung der aufsummierten Betragsabweichung Sti nach Figur 6b bildet sich ein Störwertbandpass, der zu hohen und tiefen Frequenzen durch den Verstärkerbandpass vorgegeben ist. Im Bereich B2 ergibt sich ein Minimum durch die taktsynchrone Abtastung. Liegt die Störfrequenz weit genug von der Taktfrequenz weg, kann der Störer erkannt werden.

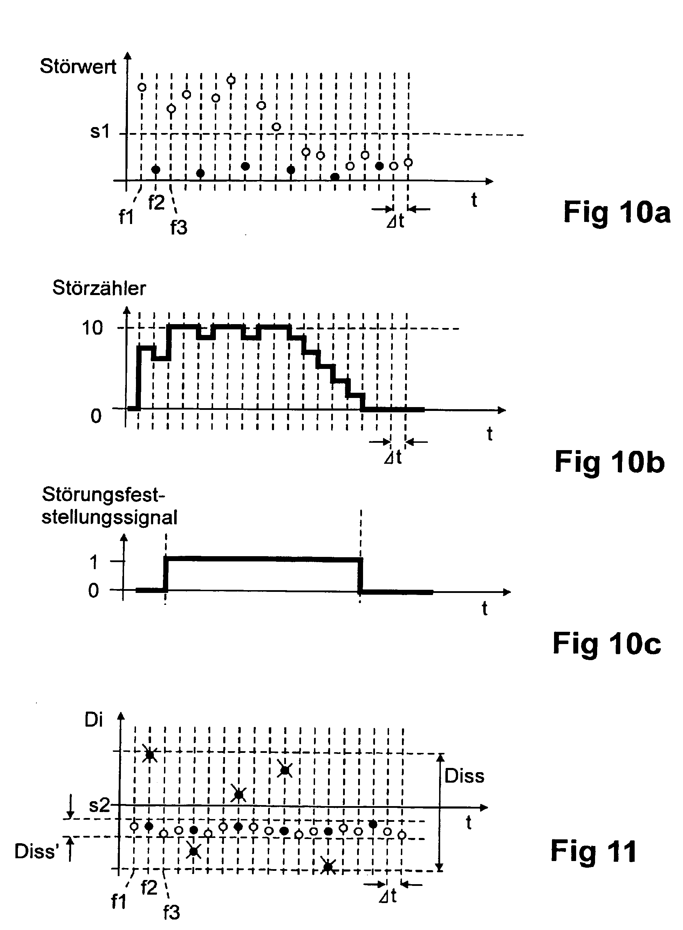

Figur 9b zeigt drei beispielhafte Taktfrequenzen f1, f2, f3 des Senders, mit denen auch das Minimum des Störwertbandpasses verschoben wird. Da das verstärkte Empfangssignal $U_a$ taktsynchron zur Taktfrequenz des Senders abgetastet wird, entsprechen die Taktfrequenzen auch Abtastfrequenzen, mit denen das verstärkte Empfangssignal abgetastet wird. Die Umschaltung zwischen den Taktfrequenzen f1, f2, f3 erfolgt, wie aus Figur 10a ersichtlich, in äquidistanten Zeitintervallen At. Im gezeichneten Beispiel liegt die Störfrequenz dicht bei der Taktfrequenz f2. Der bei f2 ermittelte Störwert liegt deutlich unter der Störschwelle s1 und wird nicht erkannt. Bei der Messung mit f1 und/oder f3 liegt der Störwert Sti über dem Schwellwert s1 und ist damit erkannt. Damit auch Fremdlicht, das von gleichartigen Sensoren zum Empfänger 5 gelangt, sicher erkannt wird, sollte die Verweildauer bei einer bestimmten Taktfrequenz des Senders oder die Frequenzfolge zufällig sein. Die Zufallsfolge kann von einem Rauschwert oder von einer rechnerisch bestimmten Quasizufallsfolge abgeleitet werden.

Figur 10a zeigt die ermittelten Störwerte bei den unterschiedlichen Taktfrequenzen des Senders. Störwerte, die den Schwellwert s1 überschreiten, generieren, wie in Figur 10b gezeigt, über einen Störzähler in wenigen Schritten (z.B. 1 bis 3, vorzugsweise 2 Schritte) den Status Störung, das heißt es erfolgt dann ein Setzen des Störfeststellungssignals wie in Figur 10c dargestellt. Durch Störwerte, die den Schwellwert s1 unterschreiten, wird der Störzähler in kleinen Schritten (z.B. Schrittweite = 1 ) dekrementiert. Wie in Figur 10c zu sehen ist, bleibt der Status Störung so lange sicher erhalten, bis genügend Störwerte in Folge den Schwellwert unterschreiten.

Figur 11 zeigt eine Methode zur Fremdlichtkompensation für den optischen Sensor, der gemäß den Figuren 10a-c im Wechsel mit drei ersten Taktfrequenzen des Senders f1, f2, f3. Innerhalb jedes Zeitintervalls Δt, innerhalb dessen der Sender mit einer bestimmten Taktfrequenz f1, f2 oder f3 betrieben wird, wird das Differenzintergral $D_i$ gebildet. Durch eine Bewertung der Werte von $D_i$ mi einem Schwellwert s2 wird das binäre Schaltsignal generiert. Im vorliegenden Fall befindet sich der optische Sensor im Schaltzustand AUS (der dadurch erhalten wird, dass die Werte von $D_i$ unterhalb von s2 liegen). Wie aus Figur 11 ersichtlich werden dabei vorab in einer Störungsanalyse sämtliche Messwerte eliminiert (dargestellt als durch gestrichene Messwerte), welche entsprechend dem Verfahren gemäß Figuren 10a-c als störungsbehaftete Messwerte erkannt werden. Damit wird der Pegelbereich der Messwerte $D_i$ von den ursprünglichen Bereich Diss auf den Wert Diss' reduziert. Damit liegen alle Werte von Di unterhalb des Schwellwertes s2, das heißt es treten keine fremdlicht bedingten Fehlschaltungen bei dem Schaltsignal mehr auf.

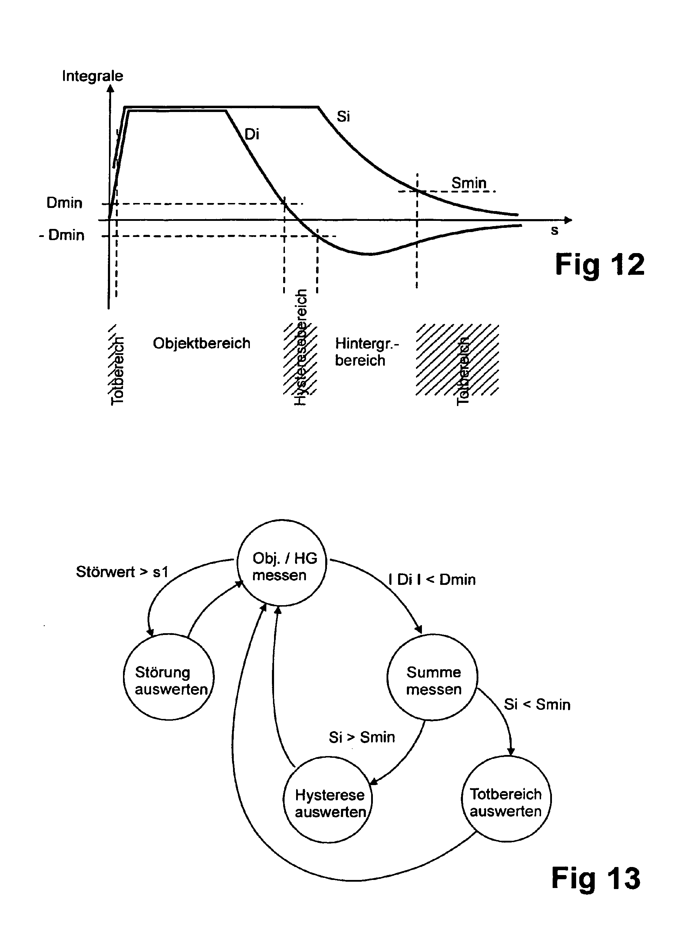

Figur 12 zeigt für den optischen Sensor gemäß Figur 1 den typischen Verlauf des Differenzintegrales Di und eines Summenintegrales Si welches durch Aufsummierungen der Summen der verstärkten Empfangssignalen $U_A$, $U_B$ erhalten wird. Das Summensignal $S_i$ liefert, wie unter Bezug auf die vorherigen Figuren aufgeführt, Informationen über das Vorhandensein von Störsignaleinflüssen als Funktion des Objektabstandes. Mit Hilfe von Schwellwerten können die folgenden Objektbereiche definiert werden:

- "Objekt erkannt" bei Di > Dmin
- "Hintergrund erkannt" bei Di < -Dimin
- "Hysteresebereich" bei (- Dimin < Di < Dmin) & (Si > Smin)
- "Totbereich" bei (- Dmin < Di < Dmin) & (Si < Smin)

Figur 13 zeigt in einem Zustandsübergangsdiagramm, wie bei jeder Messung der Störwert geprüft wird.
Überschreitet das Summenintegral Si einen Schwellwert Smin, liegt ein Hysteresebereich vor, in welchem Störeinflüsse durch Fremdlicht vorliegen. Im Hysteresebereich wird daher eine Auswertung mit verminderter Schaltfrequenz durchgeführt. Bei einem Status Störung wird der Zustand des Schaltausganges eingefroren, um ein ungewolltes Hin- und Herschalten des Schaltsignals zu verhindern. Unterschreitet das Summenintegral Si den Schwellwert Smin, liegt ein Totbereich vor. Der Schaltausgang wird in den Zustand "Aus" gesetzt, was dem "Hintergrund erkannt" entspricht. Bei Status Störung wird der optische Sensor bei verminderter Schaltfrequenz betrieben.

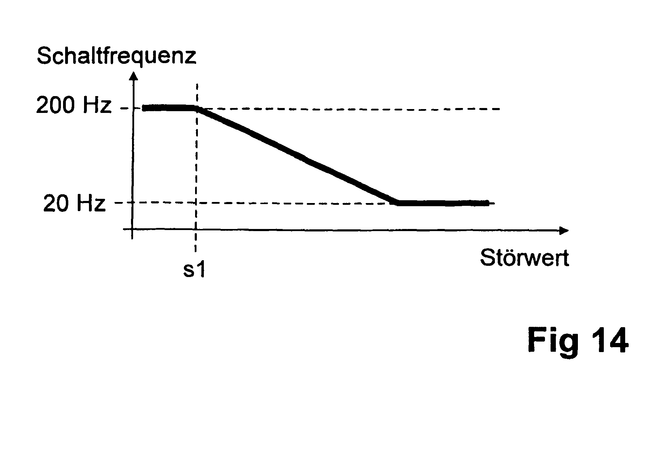

Figur 14 zeigt die typische Abhängigkeit der Schaltfrequenz vom ermittelten Störwert für die in Figur 13 erwähnten Fälle. Nachdem sich der Störwert reduziert hat, erhöht sich die Schaltfrequenz automatisch.

Bezugszeichenliste

(1)     optischer Sensor
(2)     Sendelichtstrahlen
(3)     Sender

(4)    Empfangslichtstrahlen

(5)    Empfänger

(6)    Objekt

(7)    Signalaufbereitungseinheit

(8)    Auswerteeinheit

(9)    Schaltausgang

(10)    Gehäuse

(11)    Fenster

(12)    Störlichtstrahlen

(13)    Verstärker

A:    High-Wert der Ausgangsspannung

B:    Low-Wert der Ausgangsspannung

$D_i$:    Aufsummierter Wert der Differenzspannung $U_d$
$D_i = \Sigma\, U_d$
(Summe von 1 bis k)

$dU_m$:    Betrag der Abweichung $dU_m = |\,U_{ma} - U_{mb}\,|$

k:    Anzahl der aufsummierten Betragsabweichung $dU_m$

$M_i$:    Aufsummierte Abweichung

m:    Anzahl der gemittelten Werte $U_{mb}$

$S_i$:    Aufsummierte Differenzwerte bei Zusammenschaltung aller Empfangsflächen auf Nah

$S_{min}$:    Schwellwert zur Unterscheidung von Hysterese- und Totbereich

$St_i$:    Aufsummierte Betragsabweichung
$St_i = \Sigma\, dU_m$
(Summe von 1 bis k)

$T_1$:    Zeitraum, in dem das Differenzintegral $D_i$ stark ver- fälscht wird

$T_2$, $T_3$:    Zeitfenster zum Aufsummieren von $St_i$

$U_a$:    Ausgangsspannung der Signalaufbereitungseinheit

$U_d$:    Differenzspannung    $U_d = A - B$

$U_e$:    Eingangsspannung der Signalaufbereitungseinheit

$U_{ma}$:    aktuelle Mittelwert    $U_{ma} = (A+B) / 2$

$U_{mb}$:    Bezugswert    $U_{mb} = 1/m * \Sigma\, U_{ma}$
(Summe von 1 bis m)

$U_{sn}$:    negative Spitzenwert von $U_a$

$U_{sp}$:    positive Spitzenwert von $U_a$

**Patentansprüche**

**1.** Verfahren zum Betrieb eines optischen Sensors, umfassend einen Sendelichtstrahlen emittierenden Sender, einen Empfangslichtstrahlen empfangenden Empfänger und eine Auswerteeinheit, in welcher in Abhängigkeit der Empfangssignale des Empfängers ein Objektfeststellungssignal generiert wird, **dadurch gekennzeichnet, dass** der Sender als Sendelichtstrahlen Sendepulse mit einer vorgegebenen Taktfrequenz emittiert, dass die Empfangssignale am Ausgang des Empfängers taktsynchron zur Taktfrequenz der Sendepulse abgetastet werden, dass aus den durch die Abtastung erhaltenen Abtastwerte das Objektfeststellungssignal generiert wird und dass durch eine Summenbildung von Abtastwerten Störungen erfasst werden und ein Störfeststellungssignal generiert wird.

2. Verfahren nach Anspruch 1, **dadurch gekennzeichnet, dass** zur Erfassung von Störungen eine Mittelwertbildung der bei der Abtastung erhaltenen Abtastwerte erfolgt.

3. Verfahren nach Anspruch 2, **dadurch gekennzeichnet, dass** der Mittelwert auf einen dem störungsfreien Betrieb entsprechenden Referenzwert bezogen wird.

4. Verfahren nach einem der Ansprüche 1 bis 3, **dadurch gekennzeichnet, dass** der Sender Sendepulse mit einem Puls-Pausenverhältnis emittiert, bei welchem die Längen der Pausen in derselben Größenordnung wie die Längen der Sendepulse sind.

5. Verfahren nach Anspruch 4, **dadurch gekennzeichnet, dass** der Sender Sendepulse mit einem Puls-Pausenverhältnis von 1:1 emittiert.

6. Verfahren nach einem der Ansprüche 1 bis 5, **dadurch gekennzeichnet, dass** pro Sendeperiode das Empfangssignal jeweils am Ende eines Sendepulses und am Ende einer Sendepause abgetastet wird.

7. Verfahren nach Anspruch 6, **dadurch gekennzeichnet, dass** die Differenz der bei den beiden Abtastpunkten pro Sendeperiode ermittelten Abtastwerte des Empfangssignals zur Generierung des Objektfeststellungssignals genutzt wird.

8. Verfahren nach einem der Ansprüche 1 bis 7, **dadurch gekennzeichnet, dass** zur Ermittlung des Status einer Störung eine Schwellwertbewertung durchgeführt wird.

9. Verfahren nach einem der Ansprüche 2 bis 8, **dadurch gekennzeichnet, dass** zur Ermittlung des Status einer Störung ein Vergleich zwischen aufsummierten Betragsabweichungen vom Mittelwert und der aufsummierten Differenzen vom Mittelwert durchgeführt wird.

10. Verfahren nach einem der Ansprüche 1 bis 9, **dadurch gekennzeichnet, dass** zur Vermeidung von Störungen die Taktfrequenz des Senders geändert wird.

11. Verfahren nach einem der Ansprüche 1 bis 10, **dadurch gekennzeichnet, dass** das Objektfeststellungssignal mit einer Schaltfrequenz generiert wird und über einen Schaltausgang ausgegeben wird.

12. Verfahren nach Anspruch 11, **dadurch gekennzeichnet, dass** die Schaltfrequenz bei erkannter Störung reduziert wird.

13. Verfahren nach einem der Ansprüche 1 oder 12, **dadurch gekennzeichnet, dass** der Zustand des ausgegebenen Objektfeststellungssignals bei vorhandener Störung entweder eingefroren wird oder auf einen Zustand "AUS" (Objekt nicht erkannt) gesetzt wird.

14. Verfahren nach einem der Ansprüche 1 bis 13, **dadurch gekennzeichnet, dass** dieses für Reflexionslichtschranken oder energetisch arbeitende Lichttaster oder nach dem Triangulationsprinzip arbeitende Lichttaster eingesetzt wird.

**Claims**

1. Method of operating an optical sensor, comprising a transmitter emitting transmitted light beams, a receiver receiving received light beams and an evaluating unit in which an object detection signal is generated in dependence on the received signals of the receiver, **characterised in that** the transmitter emits, as transmitted light beams, transmission pulses at a predetermined clock frequency, that the received signals are scanned at the output of the receiver in clock synchronism with the clock frequency of the transmission pulses, that the object detection signal is generated from the scanning values obtained by the scanning and that disturbances are detected by summation of scanned values and a disturbance detection signal is generated.

2. Method according to claim 1, **characterised in that** a mean value formation of the scanning values obtained in the scanning is carried out for detection of disturbances.

3. Method according to claim 2, **characterised in that** the mean value is related to a reference value corresponding with disturbance-free operation.

4. Method according to any one of claims 1 to 3, **characterised in that** the transmitter emits transmission pulses with a pulse/pause ratio in which the lengths of the pauses are in the same order of magnitude as the lengths of the transmission pulses.

5. Method according to claim 4, **characterised in that** the transmitter emits transmission pulses with a pulse/pause ratio of 1:1.

6. Method according to any one of claims 1 to 5, **characterised in that** in each transmission period the received signal is scanned each time at the end of a transmission pulse and at the end of a transmission pause.

7. Method according to claim 6, **characterised in that** the difference of the scanned values, which are detected at the two scanning points in each transmission period, of the received signals is used for generation of the object detection signal.

8. Method according to any one of claims 1 to 7, **characterised in that** the a threshold value evaluation is performed for determination of the status of a disturbance.

9. Method according to any one of claims 2 to 8, **characterised in that** a comparison between summated deviations in terms of amount from the mean value and the summated differences of the mean value is performed for determination of the status of a disturbance.

10. Method according to any one of claims 1 to 9, **characterised in that** the clock frequency of the transmitter is varied for avoidance of disturbances.

11. Method according to any one of claims 1 to 10, **characterised in that** the object detection signal is generated at a switching frequency and is issued by way of a switch output.

12. Method according to claim 11, **characterised in that** the switching frequency is reduced when a disturbance is recognised.

13. Method according to one of claims 1 and 12, **characterised in that** the state of the issued object detection signal is in the case of a disturbance either frozen or set to a state 'off' (object not recognised).

14. Method according to any one of claims 1 to 13, **characterised in that** this is used for reflection light barriers or light scanners operating with energy or light scanners operating according to the triangulation principle.

**Revendications**

1. Procédé de fonctionnement d'un capteur optique, comprenant un émetteur émettant des rayons lumineux d'émission, un récepteur recevant des rayons lumineux de réception et une unité d'évaluation dans laquelle un signal de détection d'obj et est généré en fonction des signaux de réception du récepteur, **caractérisé en ce que** l'émetteur envoie en tant que rayons lumineux d'émission des impulsions d'émission à une fréquence d'horloge prédéfinie, que les signaux de réception à la sortie du récepteur sont échantillonnés de manière synchrone par rapport à la fréquence d'horloge des impulsions d'émission, que le signal de détection d'objet est généré à partir des valeurs échantillonnées obtenues par l'échantillonnage et qu'il est formé une somme de valeurs échantillonnées pour détecter des perturbations et générer un signal de détection de perturbation.

2. Procédé selon la revendication 1, **caractérisé en ce qu'**il est formé une moyenne des valeurs échantillonnées obtenues lors de l'échantillonnage pour détecter des perturbations.

3. Procédé selon la revendication 2, **caractérisé en ce que** la moyenne est rapportée à une valeur de référence qui correspond au fonctionnement sans perturbations.

4. Procédé selon une des revendications 1 à 3, **caractérisé en ce que** l'émetteur émet des impulsions d'émission avec un rapport impulsion/pause auquel les longueurs des pauses sont du même ordre de grandeur que les longueurs des impulsions d'émission.

5. Procédé selon la revendication 4, **caractérisé en ce que** l'émetteur émet des impulsions d'émission avec un rapport impulsion/pause de 1:1.

6. Procédé selon une des revendications 1 à 5, **caractérisé en ce que**, par période d'émission, le signal de réception est échantillonné chaque fois à la fin d'une impulsion d'émission et à la fin d'une pause d'émission.

7. Procédé selon la revendication 6, **caractérisé en ce que** la différence des valeurs échantillonnées du signal de réception déterminées aux deux points d'échantillonnage par période d'émission est utilisée pour générer le signal de détection d' obj et.

8. Procédé selon une des revendications 1 à 7, **caractérisé en ce qu'**une évaluation de valeur seuil est effectuée pour déterminer l'état d'une perturbation.

9. Procédé selon une des revendications 2 à 8, **caractérisé en ce qu'**une comparaison entre somme des écarts absolus à la moyenne et somme des différences à la moyenne est effectuée pour déterminer l'état d'une perturbation.

10. Procédé selon une des revendications 1 à 9, **caractérisé en ce que** l'on fait varier la fréquence d'horloge de l'émetteur pour éviter les perturbations.

11. Procédé selon une des revendications 1 à 10, **caractérisé en ce que** le signal de détection d'objet est généré à une fréquence de commutation et délivré via une sortie de commutation.

12. Procédé selon la revendication 11, **caractérisé en ce que** la fréquence de commutation est réduite en cas de détection d'une perturbation.

13. Procédé selon une des revendications 1 ou 12, **caractérisé en ce que** l'état du signal de détection d'objet délivré est soit gelé, soit mis à un état « 0 » (objet non détecté) si une perturbation est présente.

14. Procédé selon une des revendications 1 à 13, **caractérisé en ce que** celui-ci est utilisé pour des barrières lumineuses à déflexion, des détecteurs photoélectriques énergétiques ou des détecteurs photoélectriques à triangulation.

**Fig 1**

**Fig 2**

Fig 3a

Fig 3b

Fig 4

Fig 5a

Fig 5b

Ua

Uma    Usp

Usn

T1

**Fig 6a**

Wert

Sti

Di

Mi

0

**Fig 6b**

Zeitfenster

T2    T3

**Fig 7**

Sti

Sti (T2)

Sti (T3)

s1

0

Störungsfeststellungssignal

1

0

Fig 8

Fig 9a

Fig 9b

Fig 10a

Fig 10b

Fig 10c

Fig 11

**Fig 12**

**Fig 13**

Fig 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4237311 C1
- DE 10355008 A1
- DE 19833351 A1
- DE 4319451 C2